# EUROPEAN PATENT SPECIFICATION

(11) **EP 2 477 783 B1**
(45) Date of publication and mention of the grant of the patent: **10.12.2014**
(21) Application number: 10765694.4
(22) Date of filing: 17.09.2010
(51) Int. Cl.: B23K 35/00, B23K 35/02, B23K 35/28, B23K 35/38, B32B 15/01, C22C 21/02, F28F 21/08

(54) **ALUMINIUM BRAZING SHEET**
ALUMINIUMLÖTBLECH
TÔLE À BRASAGE EN ALUMINIUM

(30) Priority: 17.09.2009 SE 0950678; 09.04.2010 SE 1050352
(43) Date of publication of application: 25.07.2012
(73) Proprietor: Gränges Sweden AB, 612 81 Finspång (SE)
(72) Inventor: ABRAHAMSSON, David, S-612 35 Finspång (SE); WESTERGÅRD, Richard, S-603 50 Norrköping (SE); STENQVIST, Torkel, S-612 40 Finspång (SE)
(74) Representative: Zacco Sweden AB
(86) International application number: PCT/SE2010/050998
(87) International publication number: WO 2011/034496

(56) References cited:
- EP-B1- 1 306 207
- WO-A1-2008/155067
- WO-A1-2010/000666
- US-A- 3 917 151
- NYLEN M ET AL: "Mechanistic studies of brazing in clad aluminium alloys", MATERIALS SCIENCE FORUM, AEDERMANNSFDORF, CH, vol. 217-222, 1 January 1996 (1996-01-01), pages 1703-1708, XP008085608, ISSN: 0255-5476

## Description

### Field of invention

The present invention relates to an improved multilayered aluminium brazing sheet comprising a core material covered with a brazing alloy as an intermediate layer, and an outer covering layer. The invention also relates to a heat exchanger comprising said improved multiteyerod aluminium brazing sheet.

### Background

The present invention relates to sheet materials for joining by means of brazing of aluminium materials in an inert or reducing atmosphere without the need to apply a flux to break up, dissolve or dislodge the superficial oxide layer.

A challenge today is to manufacture materials and components for the heat exchanger industry at as low final cost and with as high quality as possible. One commonly used technology in production of heat exchangers is brazing in a controlled atmosphere normally consisting of nitrogen with as low amounts of oxidising impurities as possible. This process is known as controlled atmosphere brazing ("CAB") and involves the application of an Al-K-F based flux on the surfaces to be joined prior to brazing. The flux breaks up or dissolves the superficial oxide layer of the filler metal to facilitate wetting between mating surfaces and prevents formation of new oxides during the joint formation. Post-brazed flux residues are, however, increasingly considered to be harmful for the heat exchanger as they may detach from the brazed aluminium surfaces and clog internal channels, thereby preventing an effective use of the heat exchanger. It is also suspected that the use of flux in some cases promotes corrosion and erosion and lead to less effective units and in some extreme cases premature failure of the unit. Apart from the purely function related drawbacks of flux usage, the impact of flux and fluxing on e.g. the working environment, cost, investments in brazing related hardware and it's maintenance, energy and the natural environment is severe.

To be able to produce heat exchangers using CAB without the application of flux, development of new materials are needed to make it possible for braze joints to form without removing the oxide layer on the surfaces of the aluminium alloy.

All temper and alloy designations hereafter used refer to the Aluminium Association designition Standards and Data and the Registration Records as published by the Aluminium Association in 2007.

The patent EP1306207B1 describes an aluminium brazing alloy suitable for brazing in an inert gas without the use of a flux. This invention is based on a multi layered brazing sheet, where the outer material is a thin covering layer covering an Al-Si based alloy containing 0.1 to 0.5wt-% Mg and 0.01 to 0.5wt-% Bi, and a core material. During the temperature ramp up stage of a braze cycle the intermediate Al-Si layer will first start to melt and expand volumetrically to break up the thin covering layer allowing molten filler metal to seep through the cracks and on to the surface of the brazing sheet

In WO2008/155067A1 a similar method for brazing without flux is disclosed. This method differs from the above by using an Mg content in the braze alloy in the interval 0.01 to 0.09wt-%. Also a low Mg content in the core material (preferably lower than 0.015wt-%) is necessary for this invention to work.

### Summary of the invention

The methods for fluxless brazing available in the prior art have a constraint in that they require presence of Bi in the braze alloy layer. Bi is in many circumstances considered an impurity, and can therefore constitute a problem in scrap handling from the production process. There is also a desire to improve the brazing process.

The objective of the present invention is to provide an aluminium alloy brazing sheet that can be brazed in an inert or reducing atmosphere, without the need to apply a flux, which results in enhanced braze joints, and which gives rise to cleaner scrap, i.e. is less of a burden in scrap handling.

The objective is achieved by the multi layered aluminium alloy brazing sheet in accordance with claim 1. Embodiments are defined by the dependent claims.

The demands from primarily the automotive industry are increasing regarding the amount of residual flux that is allowed in a heat exchanger system. It is difficult and costly to apply small and repeatable amounts flux on localised areas on the internal surfaces of a heat exchanger to repeatedly form high quality internal joints and this invention provides a clear advantage in that aspect of heat exchanger production. Since no flux is present on the outside surfaces of the heat exchanger any difficulties in detachment of flux residue that may enter e.g. the passenger compartment of the vehicle are avoided.

There is also a clear cost advantage to be had in brazing heat exchanger units without the use of flux as it eliminates not only the cost of the flux itself but also shortens the lead time through the furnace, allows for lower labour costs, and liberates floor space in the factory, decreases demands on maintenance of brazing hardware and decreases demands on housekeeping. Also, important benefits are to be had in a better working environment for people, less disposal of solid waste and waste water from the fluxing system and smaller amounts of harmful gaseous effluents from the brazing process.

The aluminium alloy brazing sheet of the present invention consists of an aluminium based core, covered on one or two sides by an Al-Si type braze alloy as an intermediate layer, where said intermediate layer is in turn covered by an outer covering layer consisting of thin Mg-free aluminium based alloy with an addition of Bi. The liquidus temperature of the intermediate Al-Si braze alloy is lower than the solidus temperature of the core and the thin covering layer, which makes it possible for the intermediate braze layer to break up the covering layer during brazing due to volumetric expansion, and makes it possible for molten filler metal to seep through the covering layer, wet any countersurface and form a joint.

The invention is hereafter described as a three layered aluminium alloy brazing sheet where brazing occurs on one side of the sheet. However, the invention can be used to create braze joints on both sides of the core, in which case the brazing sheet will be built up by five layers. It can also be covered on one side by an aluminium alloy layer with a lower corrosion potential than the core material. Also, an aluminium alloy layer positioned between core and the sacrificial layer may be an inserted to provide a diffusion hindrance for alloying elements in the core and the sacrificial layer and thus reduce intermixing between them. In that case the brazing sheet will contain six or seven layers if the diffusion alloy layer is needed on one or both sides of the core alloy.

### Detailed description of the invention

The present invention provides an aluminium alloy brazing sheet product comprising: a core material covered by an Al-Si alloy as an intermediate layer and a thin covering aluminium layer which contains Bi to enhance the brazing performance, where the said core material and the covering layer has a higher melting temperature than the intermediate brazing alloy.

The liquidus temperature of the intermediate Al-Si brazing alloy is lower than the solidus temperature of the core and the thin covering layer, which makes it possible for said intermediate braze layer to brake up the covering layer during brazing due to volumetric expansion, and makes it possible for molten filler metal to seep through the covering layer and form a joint with nearby materials in contact with the surface of said covering layer.

The said Al-Si brazing alloy contains from 0.01 to 5 wt-% Mg, preferably 0.05 to 2.5 wt-% Mg. The Mg content is most preferably 0.1 to 2.0 wt-% Mg, in order to obtain an optimal relation of the hardness of the brazing alloy and the core alloy, and a content of less than 1.5wt-% Bi, preferably less than 0.5wt-% Bi and most preferably less than 0.2wt-% Bi. The thin covering outer layer contains 0.01 to 1.0wt-% Bi, more preferably 0.05 to 0.7wt-% Bi. Most preferably the brazing alloy contains 0.07 to 0.3wt-% Bi, in order to obtain good brazing and avoid unnecessary costs.

The addition of Bi into the thin outer layer according to the present invention enhances joint formation, so that the joint is formed more rapidly and has a larger size. The presence of Bi in the thin covering layer also reduces the need to alloy large amounts of Bi into the intermediate brazing alloy, and Bi in the intermediate braze alloy may be eliminated altogether. This provides a saving in the use of Bi and reduces the amount of Bi-containing scrap. It also reduces the risk intergranular corrosion because of Bi entering the core alloy along e.g. grain boundaries both during brazing sheet production as well as during brazing. As an added benefit the casting of this alloy can be made in a single small furnace which reduces the risk of cross contamination of Bi. It is also important that the Mg content in the thin covering layer is kept low in order to avoid growth of oxidation film on the surface during heating for brazing, preferably below 0.05wt-% and most preferably there is no Mg in the thin covering layer at all.

The amount of Si in the intermediate Al-Si braze alloy can be chosen to suit the special brazing process desired and is usually between 5 and 14 wt-% Si, but preferably 7 to 13wt-% Si is used and even more preferably 10-12.5 wt-% Si. An Si content in the upper part of the Si interval will provide sufficient fluidity of the molten filler even after the covering layer has been dissolved and thus reduced the concentration of Si in the melt phase. The addition of Mg to the Al-Si brazing alloy is critical to break up the surface oxide layer and provide wetting of the countersurface, as well as the addition of Bi to the thin covering layer to give a better brazing performance.

The Al-Si braze alloy thus contains

| | |
|---|---|
| Si | 5 to 14wt-%, preferably 7 to 13wt-%, more preferably 10-12.5wt-%, |
| Mg | 0.01 to 5wt-%, preferably 0.05 to 2.5wt-%, more preferably 0.1 to 2.0 wt-%, |
| Bi | ≤1.5 wt-%, preferably 0.05 to 0.5 wt-%, most preferably 0.07 to 0.2 wt-%, |
| Fe | ≤0.8 wt-% |
| Cu | ≤0.3 wt-%, |
| Mn | ≤0.15 wt-%, |
| Zn | ≤4 wt-%, |
| Sn | ≤0.1 wt-% |
| In | ≤0.1 wt-% |
| Sr | ≤0.05 wt-%, and |

unavoidable impurities each in amounts less than 0.05 wt-% and a total impurity content of less than 0.2 wt-%, the balance consisting of aluminium.

Zn, Sn and In decrease the corrosion potential of aluminium alloys. Sr is a powerful modifier to achieve a small Si particle size. The Al-Si braze alloy may also be free from Bi, whereby the total Bi content of the braze alloy sheet is further reduced.

The brazing sheet of the present invention can be used with any aluminium brazing sheet core material. A suitable core material can be any AA3xxx series alloy. It has surprisingly been found within the present invention that joint formation in brazing works well even with Mg added to the core alloy, which means that the core material does not necessarily need to have a low Mg-content.

Hence the core alloy may contain

| | |
|---|---|
| Mn | 0.5-2.0 wt-%, |
| Cu | ≤1.2 wt-%, |
| Fe | ≤1.0 wt-%, |
| Si | ≤1.0 wt-%, |
| Ti | ≤0.2 wt-%, |
| Mg | ≤2.5 wt-%, preferably 0.03-2.0 wt-% |
| Zr, Cr,V and/or Sc | ≤0.2 wt-%, and |

unavoidable impurities each in amounts less than 0.05 wt-% and a total impurity content of less than 0.2 wt-%, the balance consisting of aluminium.

The thin covering layer consisting of an aluminium alloy, having a melting point higher than the melting point of the intermediate Al-Si braze metal, will need to be substantially Mg-free to avoid magnesium oxides to form on the surface. The thin covering layer therefore preferably will have an Mg-content lower than 0.05 wt-%, and more preferably lower than 0.01 wt-%. The most preferred case Is that no Mg is intentionally added to the alloy.

The chemical composition of the thin covering material composes,

| | |
|---|---|
| Bi | 0.01 to 1.0 wt-%, preferably 0.05 to 0.7 wt-%, and more preferably 0.07 to 0.5 wt-%, |
| Mg | ≤0.05 wt-%, preferably ≤0.01 wt-%, more preferably 0% |
| Mn | ≤1.0 wt-%, |
| Cu | ≤1.2 wt-%, |
| Fe | ≤1.0 wt-%, |
| Si | ≤4.0wt-%, preferably ≤2wt-% |
| Ti | ≤0.1 wt-%, |
| Zn ≤6 wt-%, Sn ≤0.1 wt-%, In ≤0.1 wt-%, and | |

unavoidable impurities each in amounts less than 0.05 wt-%, and a total impurity content of less than 0.2 wt-%, the balance consisting of aluminium.

Zn, Sn and In may be included to decrease the corrosion potential of the alloy and to help create a suitable post-brazed corrosion potential gradient through the thickness of the sheet

In accordance with one embodiment, the chemical composition of the thin covering material comprises

| | |
|---|---|
| Bi | 0.01 to 1.0 wt-%, preferably 0.05 to 0.7 wt-%, and more preferably 0.07 to 0.5 wt-%, |
| Mg | ≤0.05 wt-%, preferably ≤0.01 wt-%, more preferably 0% |
| Mn | ≤1.0 wt-%, |
| Cu | ≤1.2 wt-%, |
| Fe | ≤1.0 wt-%, |
| Si | ≤1.9wt-%, preferably ≤1.65wt%, more preferably ≤1.4wt-%, and most preferably ≤0.9 wt-% |
| Ti | ≤0.1 wt-%, |
| Zn ≤6 wt-%, Sn ≤0.1 wt-%, In ≤0.1 wt-%, and | |

unavoidable impurities each in amounts less than 0.05 wt-%, and a total impurity content of less than 0.2 wt-%, the balance consisting of aluminium.

An amount of Si in the thin cover layer at 1.9 wt% or less will facilitate a solid state of the covering layer when the filler layer melts, and thus also facilitate wetting and joint formation. Pure aluminium can contain up to 1.65% Si in solid solution without melting at 577 °C, i.e. when normal CAB filler alloys melt. The presence of Fe, Mn and other elements that may react with Si to form intermetallic compounds will reduce the amount of Si in solid solution, and may thus increase the Si level tolerated in the cover layer to 1.9% while still achieving the desired effect.

By the provision of intermediate Al-Si braze alloy layers and covering layers on both sides of the core, the brazing sheet can be effectively brazed on both sides.

The total thickness of the aluminium brazing sheet is in between 0.04 and 4 mm, which is suitable in the manufacture of heat exchangers. The thickness of the thin covering layer relative to the whole thickness of the multi layered brazing sheet is preferably 0.1 to 10%, so as to provide effective prevention of oxide formation of the brazing sheet surface, and yet be easily broken during brazing. The thickness of covering layer may be between 0.4 and 160 µm. The intermediate layer preferably has a thickness relative to the whole thickness of the multi layered brazing sheet of 3 to 30%. The thickness of the thin covering is chosen so that Mg and Bi will not have time to diffuse through the covering layer to the outer surface thereof during brazing, thereby minimising the risk for oxidation and impaired wetting. The thickness of the thin covering layer relative to the intermediate braze alloy layer is between 1% and 40%, more preferably between 1 and 30%, most preferably between 10 and 30%. The suitable temperature interval at which the brazing is being carried out is in the range of 560°C to 615°C, and preferably 570°C to 610°C.

The invention further provides a heat exchanger comprising the aluminium alloy brazing sheet as described above.

### Production of the brazing sheet

Each of the above described alloys may be cast using direct chill (DC) casting or continuous twin roll casting or cast continuously in a belt casting machine. The choice of casting technique is decided by technical, economical and capacity considerations. The core alloy is cast as a slab using a DC casting route, whereas the intermediate layer and the outer thin layer is cast using either DC casting or continuous casting techniques.

The braze layer ingot and the ingot for the outer surface alloy are both scalped and then heated in a furnace to a temperature between 350 and 550°C and the duration at the soaking temperature varies from 0 to 20 hours. Subsequently both alloys are hot rolled to the desired thickness and cut to suitable lengths. The braze layer plate is then placed on the scalped surface of the core ingot and the plate of the thin outer layer is then placed on the surface of the braze alloy plate. Both alloys are seam welded along two opposite sides by means of MIG welding to make a manageable ingot package, which is placed into a pre-heating furnace. The package is heated to a temperature between 350 and 550°C and the duration at the soaking temperature is between 0 and 20 hours. After that the clad package is hot rolled, cold rolled to final dimension, stretched to improve flatness and slit to delivery width. Intermediate and final heat treatments to achieve easier production and the correct delivery temper are done as needed.

### Examples

All alloys were cast using laboratory casting equipment into so-called book moulds producing small slabs with length 150mm, width 90mm and thickness 20mm. The chemical compositions of the alloys tested for brazeability can be seen in table 1.

Each slab was scalped, heated from room temperature to 450°C during 8 hours, soaked at 450°C for 2 hours and cooled in ambient air. Then the materials were rolled to a suitable thickness and soft annealed between passes when necessary to facilitate easy rolling. Then core-, intermediate braze layer-and outer layer materials were combined to make three layer clad packages where the layers were attached to each other by means of cold rolling. The materials were cold rolled to of 0.4mm thickness, which provided a single side cladding with 8% intermediate layer and 2% outer layer, with intermediate soft annealings when necessary to provide easy rolling and given a final back annealing to an H24 temper to provide large recrystallised grains in the core during the following brazing procedure. Instead of temper annealing one may provide worked tempers, e.g. H12, H14 or H112, to provide large recrystallised grains.

The brazing was made in a laboratory glass furnace with approx. 3 dm³ brazing chamber. The furnace was flushed with nitrogen during the entire brazing cycle with a slow rate of 10 standard litres per minute. The brazing cycle was a linear heating from room temperature to 600°C in 10 minutes, soaking for 3 minutes at 600°C followed by cooling in air to room temperature. The sample set-up was a simple angle on coupon where the clad materials were used as coupon and an unclad AA3003 with 0.5 mm gauge was used as the angle. All brazing was made unfluxed.

**Table 1 Chemical compositions in weight-% of tested alloys from melt analyses with OES.**

| | **Type** | **Si** | **Fe** | **Cu** | **Mn** | **Mg** | **Zr** | **Bi** |
|---|---|---|---|---|---|---|---|---|
| A | Core | 0.52 | 0.52 | 0.12 | 0.96 | 0.58 | <0.01 | <0.01 |
| B | Core | 0.57 | 0.24 | 0.13 | 0.89 | 2.51 | <0.01 | <0.01 |
| C | Core | 0.63 | 0.56 | 0.14 | 1.17 | 0.49 | <0.01 | <0.01 |
| D | Core | 0.05 | 0.18 | 0.8 | 1.71 | <0.01 | 0.13 | <0.01 |
| E | Core | 0.05 | 0.2 | 0.28 | 1.3 | 0.22 | <0.01 | <0.01 |
| F | Core | 0.53 | 0.39 | 0.12 | 1.11 | <0.01 | <0.01 | <0.01 |
| G | intermediate braze cladding | 11.8 | 0.13 | <0.01 | <0.01 | <0.01 | <0.01 | <0.01 |
| H | intermediate braze cladding | 12.1 | 0.14 | <0.01 | <0.01 | <0.01 | <0.01 | 0.05 |
| I | intermediate braze cladding | 11.7 | 0.14 | <0.01 | <0.01 | <0.01 | <0.01 | 0.11 |
| J | intermediate braze cladding | 11.6 | 0.14 | <0.01 | <0.01 | 0.10 | <0.01 | 0.11 |
| K | intermediate braze cladding | 11.8 | 0.13 | <0.01 | <0.01 | 0.06 | <0.01 | <0.01 |
| L | intermediate braze cladding | 11.9 | 0.14 | <0.01 | <0.01 | 0.05 | <0.01 | 0.05 |
| M | intermediate braze cladding | 11.8 | 0.14 | <0.01 | <0.01 | 0.09 | <0.01 | 0.06 |
| N | intermediate braze cladding | 11.9 | 0.13 | <0.01 | <0.01 | 0.09 | <0.01 | <0.01 |
| O | intermediate braze cladding | 11.6 | 0.09 | <0.01 | <0.01 | 1.0 | <0.01 | 0.1 |
| P | intermediate braze cladding | 11.8 | 0.20 | <0.01 | 0.02 | 4.25 | <0.01 | 0.1 |
| Q | intermediate braze cladding | 12.1 | 0.18 | <0.01 | 0.02 | 2.35 | <0.01 | 0.1 |
| R | Outer layer | 0.04 | 0.16 | <0.01 | <0.01 | <0.01 | <0.01 | <0.01 |
| S | Outer layer | 0.04 | 0.15 | <0.01 | <0.01 | <0.01 | <0.01 | 0.1 |
| T | Outer layer | 0.04 | 0.15 | <0.01 | <0.01 | <0.01 | <0.01 | 0.2 |
| U | Outer layer | 0.04 | 0.15 | <0.01 | <0.01 | <0.01 | <0.01 | 0.3 |
| V | Outer layer | 0.04 | 0.15 | <0.01 | <0.01 | <0.01 | <0.01 | 0.4 |

The above samples was examined by visual examination of the braze joints and a representative selection of some of the results is given below. All samples falling within the invention gave acceptable braze joints and a rapid formation of the fillets.

**Table 2, selected experimental results**

| | Comment | Core | Intermediate braze cladding | Covering layer | Result |
|---|---|---|---|---|---|
| Ex 1 (Comparative) | Standard type brazing sheet without outer covering layer. | D | G | - | No joint formation occurred between the clad coupon and the unclad angle during brazing. |
| Ex 2 (Comparative) | sample made in accordance to the prior art described in WO2008/ 155067A1. | F | M | R | Joint formation occurs between the clad coupon and the unclad angle during brazing. |
| Ex 3 (Comparative) | sample made in accordance described in EP1306207B1. | F | O | R | Joint formation occurs between the clad couand the unclad angle during brazing. |
| Ex 4 | | F | M | S | Joint between clad coupon and unclad angle during brazing formed more rapidly and grew to a larger size than in Comparative example 2. |
| Ex 5 | | F | O | S | Joint between clad coupon and unclad angle during brazing formed more rapidly and grew to a larger size than in Comparative example 3. |
| Ex 6 | | E | N | U | Joint formation occurs between the clad coupon and the unclad angle during brazing despite absence of Bi in the intermediate braze cladding. |
| Ex 7 | | D | N | T | Joint formation occurs between the clad coupon and the unclad angle during brazing despite absence of Bi in the intermediate braze cladding. |

In Examples 4 and 5, joint formation occurs between the clad coupon and the unclad angle during brazing. The joint formed more rapidly and grew to a slightly larger size than in the Corresponding examples 2 and 3. This is attributed to the presence of Bi in the outer layer according to the invention.

In Examples 6 and 7, joint formation occurs between the clad coupon and the unclad angle during brazing, despite the absence of Bi in the intermediate braze cladding. This is attributed to the presence of Bi in the outer layer according to the invention.

## Claims

1. A multi layered aluminium alloy brazing sheet consisting of: a core material that on either one or both sides has an intermediate layer consisting of an Al-Si braze alloy interposed between the core and a thin covering layer on top of the intermediate layer, where the said core material and the covering layer has a higher melting temperature than the Al-Si braze alloy, the covering layer consisting of
| | |
|---|---|
| Bi | 0.01 to 1.0 wt-%, |
| Mg | ≤0.05 wt-%, preferably ≤0.01 wt-%, more preferably 0% |
| Mn | ≤1.0 wt-%, |
| Cu | ≤1.2 wt-%, |
| Fe | ≤1.0 wt-%, |
| Si | ≤4.0wt-%, preferably ≤2.0-wt% |
| Ti | ≤0.1 wt-%, |
| Zn ≤6 wt-%, Sn ≤0.1 wt-%, In ≤0.1 wt-%, and | |
unavoidable impurities each in amounts less than 0.05 wt-%, and
a total impurity content of less than 0.2 wt-%,
balance aluminium.

2. The aluminium alloy brazing sheet according to claim 1, wherein the covering layer contains Bi in an amount of 0.05 to 0.7 wt-%.

3. The aluminium alloy brazing sheet according to claim 1, wherein the covering layer contains Bi in an amount of 0.07 to 0.5 wt-%.

4. The aluminium alloy brazing sheet according to any of claims 1-3, wherein the thin covering layer contains Si in an amount of ≤1.9wt-%, preferably ≤1.65wt%, more preferably ≤1.4wt-%, and most preferably ≤0.9 wt-%.

5. The aluminium alloy brazing sheet according to any of claims 1-4, wherein the Al-Si braze alloy consists of
| | |
|---|---|
| Si | 5 to 14 wt-%, preferably 7 to 13 wt-%, more preferably 10-12.5 wt-%, |
| Mg | 0.01 to 5 wt-%, preferably 0.05 to 2.5 wt-%, more preferably 0.1 to 2.0 wt-%, |
| Bi | ≤1.5 wt-%, preferably 0.05 to 0.5 wt-%, most preferably 0.07 to 0.3 wt-%, |
| Fe | ≤0.8 wt-% |
| Cu | ≤0.3 wt-%, |
| Mn | ≤0.15 wt-%, |
| Zn | ≤4 wt-% , |
| Sn | ≤0.1 wt-% |
| In | ≤0.1 wt-% |
| Sr | ≤0.05 wt-%, and |
unavoidable impurities each in amounts less than 0.05 wt-% and a total impurity content of less than 0.2 wt-%, and balance aluminium.

6. The aluminium alloy brazing sheet according to any of claims 1-5, where the Al-Si braze alloy does not contain Bi.

7. The aluminium alloy brazing sheet according to any of claims 1-6, wherein the core consists of
| | |
|---|---|
| Mn | 0.5-2.0 wt-%, |
| Cu | ≤1.2 wt-%, |
| Fe | ≤1.0 wt-%, |
| Si | ≤1.0 wt-%, |
| Ti | ≤0.2 wt-%, |
| Mg | ≤2.5 wt-%, preferably 0.03-2.0 wt-% |
| Zr, Cr,V and/or Sc in total | ≤0.2 wt-%, and |
unavoidable impurities each in amounts less than 0.05 wt-% and a total impurity content of less than 0.2 wt-%, and balance aluminium.

8. The aluminium alloy brazing sheet according to any of claims 1-7, wherein the intermediate layer and the covering layer is present on both sides of the core.

9. The aluminium brazing sheet according to any of claims 1-8, where the covering layer has a thickness between 0.4 and 160 µm.

10. The aluminium alloy brazing sheet according to any of claims 1-9 where the total thickness of the aluminium brazing sheet is in between 0.04 and 4 mm.

11. The aluminium alloy brazing sheet according to any of claims 1-10 where the thickness of the thin covering layer relative to the intermediate layer is between 1% and 40%, more preferably between 1 and 30%, most preferably between 10 and 30%.

12. The aluminium alloy brazing sheet according to any of claims 1-11, where the thickness of the intermediate layer to the thickness of the aluminium alloy brazing sheet is 3 to 30%.

13. A heat exchanger comprising the aluminium alloy brazing sheet according to any of claims 1-12.

## Patentansprüche

1. Mehrschichtiges Aluminiumlegierungslötblech, das besteht aus: einem Kernmaterial, das entweder auf einer Seite oder auf beiden Seiten eine Zwischenschicht aufweist, die aus einer Al-Si-Lötlegierung besteht, die zwischen dem Kern und einer dünnen Deckschicht auf der Zwischenschicht angeordnet ist, wobei das Kernmaterial und die Deckschicht eine höhere Schmelztemperatur als die Al-Si-Lötlegierung aufweisen, wobei die Deckschicht besteht aus:
| | |
|---|---|
| Bi | 0,01 bis 1, 0 Gew.-%, |
| Mg | ≤ 0,05 Gew.-%, vorzugsweise ≤ 0,01 Gew.-%, mehr bevorzugt 0 %, |
| Mn | ≤ 1,0 Gew.-%, |
| Cu | ≤ 1,2 Gew.-%, |
| Fe | ≤ 1,0 Gew.-%, |
| Si | ≤ 4,0 Gew.-%, vorzugsweise ≤ 2,0 Gew.-%, |
| Ti | ≤ 0,1 Gew.-%, |
| Zn | ≤ 6 Gew.-%, Sn ≤ 0,1 Gew.-%, In ≤ 0,1 Gew.-%, und |
unvermeidbaren Verunreinigungen, jeweils in Mengen von weniger als 0,05 Gew.-% und
in einem Gesamtgehalt an Verunreinigungen von weniger als 0,2 Gew.-%,
den Rest Aluminium.

2. Aluminiumlegierungslötblech nach Anspruch 1, wobei die Deckschicht Bi in einer Menge von 0,05 bis 0,7 Gew.-% enthält.

3. Aluminiumlegierungslötblech nach Anspruch 1, wobei die Deckschicht Bi in einer Menge von 0,07 bis 0,5 Gew.-% enthält.

4. Aluminiumlegierungslötblech nach einem der Ansprüche 1 bis 3, wobei die dünne Deckschicht Si in einer Menge von ≤ 1,9 Gew.-%, vorzugsweise ≤ 1,65 Gew.-%, mehr bevorzugt ≤ 1,4 Gew.-% und am meisten bevorzugt ≤ 0,9 Gew.-% enthält.

5. Aluminiumlegierungslötblech nach einem der Ansprüche 1 bis 4, wobei die Al-Si-Lötlegierung besteht aus:
| | |
|---|---|
| Si | 5 bis 14 Gew.-%, vorzugsweise 7 bis 13 Gew.-%, mehr bevorzugt 10 bis 12,5 Gew.-%, |
| Mg | 0,01 bis 5 Gew.-%, vorzugsweise 0,05 bis 2,5 Gew.-%, mehr bevorzugt 0,1 bis 2,0 Gew.-%, |
| Bi | ≤ 1,5 Gew.-%, vorzugsweise 0,05 bis 0,5 Gew.-%, am meisten bevorzugt 0,07 bis 0,3 Gew.-%, |
| Fe | ≤ 0,8 Gew.-% |
| Cu | ≤ 0,3 Gew.-%, |
| Mn | ≤ 0,15 Gew.-%, |
| Zn | ≤ 4 Gew.-% , |
| Sn | ≤ 0,1 Gew.-%, |
| In | ≤ 0,1 Gew.-% |
| Sr | ≤ 0,05 Gew.-%, und |
unvermeidbaren Vereinigungen, jeweils in Mengen von weniger als 0,05 Gew.-% und einem Gesamtgehalt an Verunreinigungen von weniger als 0,2 Gew.-%, und den Rest Aluminium.

6. Aluminiumlegierungslötblech nach einem der Ansprüche 1 bis 5, wobei die Al-Si-Lötlegierung kein Bi enthält.

7. Aluminiumlegierungslötblech nach einem der Ansprüche 1 bis 6, wobei der Kern besteht aus:
| | |
|---|---|
| Mn | 0,5 bis 2,0 Gew.-%, |
| Cu | ≤ 1,2 Gew.-%, |
| Fe | ≤ 1,0 Gew.-%, |
| Si | ≤ 1,0 Gew.-%, |
| Ti | ≤ 0,2 Gew.-%, |
| Mg | ≤ 2,5 Gew.-%, vorzugsweise 0,03-2,0 Gew.-% |
| Zr, Cr, V und/oder Sc von insgesamt | ≤ 0,2 Gew.-%, und |
unvermeidbaren Vereinigungen, jeweils in Mengen von weniger als 0,05 Gew.-% und einem Gesamtgehalt an Verunreinigungen von weniger als 0,2 Gew.-% und den Rest Aluminium.

8. Aluminiumlegierungslötblech nach einem der Ansprüche 1 bis 7, wobei die Zwischenschicht und die Deckschicht auf beiden Seiten des Kerns vorhanden sind.

9. Aluminiumlegierungslötblech nach einem der Ansprüche 1 bis 8, wobei die Deckschicht eine Dicke zwischen 0,4 und 160 µm aufweist.

10. Aluminiumlegierungslötblech nach einem der Ansprüche 1 bis 9, wobei die Gesamtdicke des Aluminiumlötblechs zwischen 0,04 und 4 mm beträgt.

11. Aluminiumlegierungslötblech nach einem der Ansprüche 1 bis 10, wobei die Dicke der dünnen Deckschicht in Bezug auf die Zwischenschicht zwischen 1 % und 40 %, mehr bevorzugt zwischen 1 und 30 % und am meisten bevorzugt zwischen 10 und 30 % liegt.

12. Aluminiumlegierungslötblech nach einem der Ansprüche 1 bis 11, wobei die Dicke der Zwischenschicht zur Dicke des Aluminiumlegierungslötblechs 3 bis 30 % beträgt.

13. Wärmetauscher, der das Aluminiumlegierungslötblech nach einem der Ansprüche 1 bis 12 umfasst.

## Revendications

1. Tôle à brasage en alliage d'aluminium multicouches constituée de : une matière d'âme qui sur soit l'un, soit les deux côtés, a une couche intermédiaire constituée d'un alliage de brasage Al-Si interposé entre l'âme et une couche de recouvrement mince sur le dessus de la couche intermédiaire, ladite matière d'âme et la couche de recouvrement ayant une température de fusion plus élevée que l'alliage de brasage Al-Si, la couche de recouvrement étant constituée de :
| | |
|---|---|
| Bi | 0,01 à 1,0 % en poids, |
| Mg | ≤ 0,05 % en poids, de préférence ≤ 0,01 % en poids, de façon davantage préférée 0 % |
| Mn | ≤ 1,0 % en poids, |
| Cu | ≤ 1,2 % en poids, |
| Fe | ≤ 1,0 % en poids, |
| Si | ≤ 4,0 % en poids, de préférence ≤ 2,0 % en poids |
| Ti | ≤ 0,1 % en poids, |
| Zn ≤ 6 | % en poids, Sn ≤ 0,1 % en poids, In ≤ 0,1 % en poids, et |
des impuretés inévitables chacune dans des quantités de moins de 0,05 % en poids, et
une teneur totale en impuretés de moins de 0,2 % en poids,
le reste d'aluminium.

2. Tôle à brasage en alliage d'aluminium selon la revendication 1, dans laquelle la couche de recouvrement contient du Bi dans une quantité de 0,05 à 0,7 % en poids.

3. Tôle à brasage en alliage d'aluminium selon la revendication 1, dans laquelle la couche de recouvrement contient du Bi dans une quantité de 0,07 à 0,5 % en poids.

4. Tôle à brasage en alliage d'aluminium selon l'une quelconque des revendications 1 à 3, dans laquelle la couche de recouvrement mince contient du Si dans une quantité de ≤ 1,9 % en poids, de préférence ≤ 1,65 % en poids, de façon davantage préférée ≤ 1,4 % en poids et de la façon que l'on préfère le plus ≤ 0,9 % en poids.

5. Tôle à brasage en alliage d'aluminium selon l'une quelconque des revendications 1 à 4, dans laquelle l'alliage de brasage Al-Si est constitué de :
| | |
|---|---|
| Si | 5 à 14 % en poids, de préférence 7 à 13 % en poids, de façon davantage préférée 10-12,5 % en poids, |
| Mg | 0,01 à 5 % en poids, de préférence 0,05 à 2,5 % en poids, de façon davantage préférée 0,1 à 2,0 % en poids, |
| Bi | ≤ 1,5 % en poids, de préférence 0,05 à 0,5 % en poids, de façon davantage préférée 0,07 à 0,3 % en poids |
| Fe | ≤ 0,8 % en poids, |
| Cu | ≤ 0,3 % en poids, |
| Mn | ≤ 0,15 % en poids, |
| Zn | ≤ 4 % en poids, |
| Sn | ≤ 0,1 % en poids, |
| In | ≤ 0,1 % en poids, |
| Sr | ≤ 0,05 % en poids, et |
des impuretés inévitables chacune dans des quantités de moins de 0,05 % en poids et une teneur totale en impuretés de moins de 0,2 % en poids et le reste d'aluminium.

6. Tôle à brasage en alliage d'aluminium selon l'une quelconque des revendications 1 à 5, dans laquelle l'alliage de brasage Al-Si ne contient pas de Bi.

7. Tôle à brasage en alliage d'aluminium selon l'une quelconque des revendications 1 à 6, dans laquelle l'âme est constituée de :
| | |
|---|---|
| Mn | 0,5-2,0 % en poids, |
| Cu | ≤ 1,2 % en poids, |
| Fe | ≤ 1,0 % en poids, |
| Si | ≤ 1,0 % en poids, |
| Ti | ≤ 0,2 % en poids, |
| Mg | ≤ 2,5 % en poids, de préférence 0,03-2,0 % en poids |
| Zr, Cr, V et/ou Sc au total | ≤ 0,2 % en poids, et |
des impuretés inévitables chacune dans des quantités de moins de 0,05 % en poids et une teneur totale en impuretés de moins de 0,2 % en poids et le reste d'aluminium.

8. Tôle à brasage en alliage d'aluminium selon l'une quelconque des revendications 1 à 7, dans laquelle la couche intermédiaire et la couche de recouvrement sont présentes sur les deux côtés de l'âme.

9. Tôle à brasage en aluminium selon l'une quelconque des revendications 1 à 8, dans laquelle la couche de recouvrement a une épaisseur entre 0,4 et 160 µm.

10. Tôle à brasage en alliage d' aluminium selon l'une quelconque des revendications 1 à 9, dans laquelle l'épaisseur totale de la tôle à brasage en aluminium est entre 0,04 et 4 mm.

11. Tôle à brasage en alliage d' aluminium selon l'une quelconque des revendications 1 à 10, dans laquelle l'épaisseur de la couche de recouvrement mince par rapport à la couche intermédiaire est entre 1 % et 40 %, de façon davantage préférée entre 1 et 30 %, de la façon que l'on préfère le plus entre 10 et 30 %.

12. Tôle à brasage en alliage d' aluminium selon l'une quelconque des revendications 1 à 11, dans laquelle l'épaisseur de la couche intermédiaire par rapport à l'épaisseur de la tôle à brasage en alliage d'aluminium est de 3 à 30 %.

13. Echangeur de chaleur comprenant la tôle à brasage en alliage d'aluminium selon l'une quelconque des revendications 1 à 12.
